# EUROPEAN PATENT APPLICATION

(11) **EP 3 176 986 A1**
(43) Date of publication of application: **07.06.2017**
(21) Application number: 14881748.9
(22) Date of filing: 21.10.2014
(51) Int. Cl.: H04L 12/741

(54) **METHOD, DEVICE AND SYSTEM FOR REMOTE DESKTOP PROTOCOL GATEWAY TO CONDUCT ROUTING AND SWITCHING**

(30) Priority: 31.07.2014 CN 201410373569
(71) Applicant: ZTE Corporation, Shenzhen, Guangdong 518057 (CN)
(72) Inventor: WEI, Guoqiang, Shenzhen Guangdong 518057 (CN)
(74) Representative: Brevalex
(86) International application number: PCT/CN2014/089066
(87) International publication number: WO 2015/117380

(57) **Abstract**

Disclosed is a method for an RDP gateway to conduct routing and switching, which is applied to a network comprising one RDP gateway and a plurality of RDP servers. The method comprises: receiving a first RDP request message sent by an RDP terminal, the first RDP request message carrying address information about a target RDP server; parsing the address information about the target RDP server in the first RDP request message; and deleting the address information about the target RDP server in the first RDP request message to obtain a second RDP request message, and sending the second RDP request message to the target RDP server corresponding to the parsed address information. Also disclosed at the same time are a remote access method, an RDP gateway, a remote access system and a computer storage medium.

## Description

### Technical Field

The present disclosure relates to remote access techniques in the field of computers and wireless communications, and in particular to a method, device and system for performing routing and switching by a Remote Desktop Protocol (RDP) gateway.

### Background

Terminal users use clients to access a remote computer through the Remote Desktop Protocol (RDP). Use of a remote computer, such as a physical machine or a virtual machine, is a common internal cloud computing solution. Particularly, a cloud computing solution using a virtual machine can distribute resources to terminal users in a more dynamic and more appropriate way.

In the related art, terminals typically perform one-to-one communication with RDP servers. Terminal users using clients may access a remote desktop in a direct connection, i.e., accessing an RDP server directly. However, this requires many portals of the RDP server to be exposed to the outside, and if a corporate intranet is accessed through the Internet, it may result in a security problem. Terminal users using clients may also access a remote desktop through one RDP gateway that is in charge of forwarding an RDP request message initiated by the client to a corresponding RDP server; in this way, only one portal is exposed to the outside, and thus higher security is ensured when the corporate intranet is accessed through the Internet.

However, based on the above related art, when remote access is performed through an RDP gateway, the RDP only gives a solution for a network where one RDP gateway performs one-to-one communication with one RDP server. But for a network where one RDP gateway communicates with multiple RDP servers, i.e., for a network where there is only one RDP gateway forwarding the RDP request message to multiple RDP servers, the RDP in the related art has not yet given a solution as to how to determine a destination where the RDP request message is forwarded, i.e., a target RDP server cannot be determined in the related art.

### Summary

In view of the above, embodiments of the disclosure are intended to provide a method, device and system for performing routing and switching by a Remote Desktop Protocol gateway, which enable an RDP terminal to directly access a target RDP server through an RDP gateway in cases where one RDP gateway corresponds to multiple RDP servers.

To this end, the technical solutions of the disclosure are implemented as follows.

Embodiments of the disclosure provide a method for performing routing and switching by an RDP gateway, applied in a network including one RDP gateway and multiple RDP servers, the method including:
a first RDP request message transmitted from an RDP terminal is received, the first RDP request message carrying address information of a target RDP server;
the address information of the target RDP server carried in the first RDP request message is parsed; and
the address information of the target RDP server is deleted from the first RDP request message to obtain a second RDP request message, and the second RDP request message is transmitted to the target RDP server corresponding to the parsed address information.

In a specific embodiment, the method may further include:
upon reception of a requested result returned by the target RDP server corresponding to the parsed address information, transmitting the requested result to the RDP terminal.

In a specific embodiment, the method may further include:
the address information of the target RDP server is carried in a username field of the first RDP request message.

In a specific embodiment, the username field may include a server address field and a login username field, the server address field may carry the address information of the target RDP server, and the login username field may carry a login username of the RDP terminal.

In a specific embodiment, the step that the address information of the target RDP server carried in the first RDP request message is parsed may include:
the username field of the first RDP request message is parsed, and the address information of the target RDP server is extracted from the server address field.

Embodiments of the disclosure further provide a method for remote access, applied in a network including one Remote Desktop Protocol (RDP) gateway and multiple RDP servers, the method including:
an RDP terminal transmits a first RDP request message to the RDP gateway, the first RDP request message carrying address information of a target RDP server;
upon reception of the first RDP request message, the RDP gateway parses the address information of the target RDP server carried in the first RDP request message, deletes the address information of the target RDP server from the first RDP request message to obtain a second RDP request message, and transmits the second RDP request message to the target RDP server corresponding to the parsed address information.

In a specific embodiment, the method may further include:
upon reception of the second RDP request message, the target RDP server corresponding to the parsed address information returns a requested result to the RDP gateway; and
upon reception of a requested result returned by the target RDP server corresponding to the parsed address information, the RDP gateway transmits the requested result to the RDP terminal.

In a specific embodiment, the method may further include:
the address information of the target RDP server is carried in a username field of the first RDP request message.

In a specific embodiment, the username field may include a server address field and a login username field, the server address field may carry the address information of the target RDP server, and the login username field may carry a login username of the RDP terminal.

In a specific embodiment, the step that upon reception of the first RDP request message, the RDP gateway parses the address information of the target RDP server carried in the first RDP request message may include:
upon reception of the first RDP request message, the RDP gateway parses the username field of the first RDP request message, and extracts the address information of the target RDP server from the server address field.

Based on the above method, embodiments of the disclosure further provide a Remote Desktop Protocol (RDP) gateway, including a first reception module, a parsing module, a deletion module and a first transmission module, in which:
the first reception module is arranged to receive a first RDP request message transmitted from an RDP terminal, the first RDP request message carrying address information of a target RDP server;
the parsing module is arranged to parse the address information of the target RDP server carried in the first RDP request message;
the deletion module is arranged to delete the address information of the target RDP server from the first RDP request message to obtain a second RDP request message; and
the first transmission module is arranged to transmit the second RDP request message to the target RDP server corresponding to the parsed address information.

In a specific embodiment, the RDP gateway may further include:
a second reception module arranged to a requested result returned by the target RDP server corresponding to the parsed address information; and
a second transmission module arranged to transmit the requested result to the RDP terminal.

In a specific embodiment, the address information of the target RDP server may be carried in a username field of the first RDP request message.

In a specific embodiment, the username field may include a server address field and a login username field, the server address field may carry the address information of the target RDP server, and the login username field may carry a login username of the RDP terminal.

In a specific embodiment, the parsing module may be arranged to parse the username field of the first RDP request message, and extract the address information of the target RDP server from the server address field.

Based on the above methods, embodiments of the disclosure further provide a system for remote access, including at least one Remote Desktop Protocol (RDP) terminal, an RDP gateway and at least one RDP server, in which:
the RDP terminal is arranged to transmit a first RDP request message to the RDP gateway, the first RDP request message carrying address information of a target RDP server;
the RDP gateway is arranged to: receive, from the RDP terminal, the first RDP request message carrying the address information of the target RDP server; parse the address information of the target RDP server carried in the first RDP request message; delete the address information of the target RDP server from the first RDP request message to obtain a second RDP request message, and transmit the second RDP request message to the target RDP server corresponding to the parsed address information; and
the RDP server is arranged to receive the second RDP request message transmitted from the RDP gateway, and return a requested result to the RDP gateway.

Embodiments of the disclosure further provide a computer storage medium having stored therein computer-executable instructions arranged to execute the above methods.

In the method, device and system for performing routing and switching by an RDP gateway according to the embodiments of the disclosure, a first RDP request message transmitted from an RDP terminal is received, the first RDP request message carrying address information of a target RDP server; the address information of the target RDP server carried in the first RDP request message is parsed; and the address information of the target RDP server is deleted from the first RDP request message to obtain a second RDP request message, and the second RDP request message is transmitted to the target RDP server corresponding to the parsed address information. In this way, the embodiments of the disclosure can be applied in a network including one RDP gateway and multiple RDP servers, the RDP terminal enables the address information of the target RDP server to be carried in the first RDP request message, and transmits the first RDP request message to the RDP gateway; the RDP gateway determines, according to the address information of the target RDP server, the target RDP server where the second request message is to be forwarded, deletes the address information of the target RDP server from the first RDP request message and transmits the resulting message to the target RDP server corresponding to the address information.

### Brief description of the drawings

Fig, 1 is a schematic structural diagram of a system for remote access according to an embodiment of the disclosure;
Fig. 2 is a flow chart of a method for remote access according to an embodiment of the disclosure;
Fig. 3 is a flow chart of a method for performing routing and switching by an RDP gateway according to an embodiment of the disclosure;
Fig, 4 is a schematic structural diagram of a system for remote access according to a first embodiment of the disclosure; and
Fig. 5 is a schematic structural diagram of an RDP gateway according to an embodiment of the disclosure.

### Detailed Description

The embodiments of the disclosure are applied in a system for remote access mainly including at least one RDP terminal, an RDP gateway and at least one RDP server; in the system for remote access, the RDP gateway may be a physical device in a bridging mode, i.e., an external device independent from the RDP server, and the RDP terminal requests a target RDP server for resources through the RDP gateway; the RDP gateway may also be a software system running on a bottom layer of an operating system of a certain RDP server, i.e., an internal module of the RDP server (referred to as RDP gateway module), a first RDP request message transmitted by the RDP terminal is acquired by the RDP gateway at the bottom layer of the operating system of the RDP server; and the RDP gateway module processes the first RDP request message to obtain a second RDP request message, and transmits the second RDP request message to a corresponding target RDP server.

Specific embodiments of the disclosure will be further elaborated below with reference to the drawings.

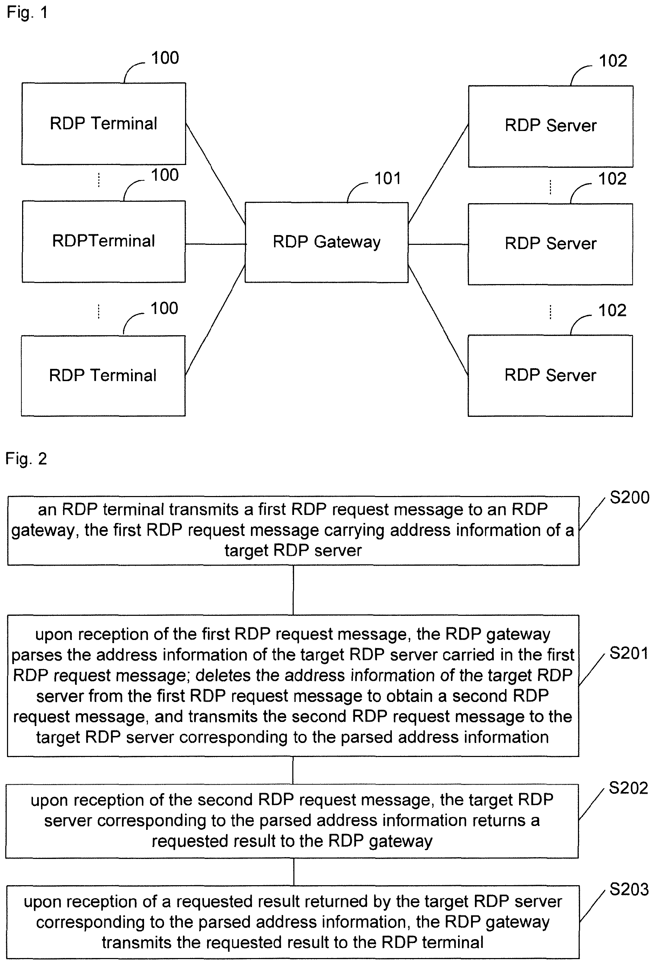

Fig. 1 is a schematic structural diagram of a system for remote access according to an embodiment of the disclosure. As shown in Fig. 1, the system for remote access includes at least one RDP terminal 100, an RDP gateway 101 and at least one RDP server 102.

The RDP terminal 100 is arranged to transmit a first RDP request message carrying address information of a target RDP server 102to the RDP gateway 101.

The RDP gateway 101 is arranged to: receive, from the RDP terminal 100, the first RDP request message carrying the address information of the target RDP server 102; parse the address information of the target RDP server 102 carried in the first RDP request message; delete the address information of the target RDP server 102 from the first RDP request message to obtain a second RDP request message, and transmit the second RDP request message to the target RDP server 102 corresponding to the parsed address information.

The RDP server 102 is arranged to receive the second RDP request message from the RDP gateway 101, and return a requested result to the RDP gateway 101.

Specifically, the first RDP request message is a certain message packet during the stage of negotiation; and the second RDP request message is an RDP request message obtained through deletion of the address information of the target RDP server 102 from the first RDP request message.

Based on the above system architecture, as shown in Fig. 2, embodiments of the disclosure further provide a method for remote access implemented based on the system for remote access as shown in Fig. 1, applied in a network including one RDP gateway and multiple RDP servers, the method including the following steps.

In Step 200, an RDP terminal 100 transmits a first RDP request message to an RDP gateway 101. The first RDP request message carries address information of a target RDP server 102.

Herein, the RDP terminal 100 can access, in a Windows system, the target RDP server 102 through a client Mstsc.exe or an open-source client FreeRDP and the like.

Herein, the username field of the first RDP request message is redefined, the redefined username field may include a server address field and a login username field, the server address field may carry the address information of the target RDP server 102, and the login username field may carry a login username of the RDP terminal 100.

Herein, after starting a client Mstsc.exe or Freerdp on the RDP terminal 100, a user may input address information of the target RDP server 102 desired to connect at a position corresponding to "ip: port" in a prompt box for username according to an input format, ip: port\username@domain, in an input box for username on an interface of the client; the address information may include an IP address or host name, or port number; accordingly, the IP address or host name of the target RDP server 102 is input at a position corresponding to "ip", and the port number of the target RDP server 102 is input at a position corresponding to "port"; if the port number of the target RDP server 102 is 3389 by default, since port 3389 is a service port, by default, of the remote desktop on Windows 2000(2003) Server and a remote server can be connected through the service port using connection tools such as "remote desktop", thus the service port is a default service port in the Windows operation system, and the port number of this service port is not required to be input by the user; the login username is input at a position corresponding to "username" in the prompt box for username; if the target RDP server 102 is arranged in a domain of computers, it is required to input a domain name at a position corresponding to "domain", and if the target RDP server 102 is not arranged in the domain, it is not required to input the domain name at the position corresponding to "domain".

Herein, programs of the client Mstsc.exe and Freerdp also accept, as input, an rdp file complying with the RDP file specification formulated by the Microsoft, the RDP file including the address information and the login username of the target RDP server 102 and the like.

The RDP terminal 100 stores the input address information and the input login username of the target RDP server 102 into respective fields of the username field of the first RDP request message; when the domain name is input, the input domain name is stored into a domain field of the first RDP request message, then the RDP terminal 100 is connected with the RDP gateway 101 through the IP address of the RDP gateway 101, and transmits, to the RDP gateway 101, the first RDP request message carrying the address information of the target RDP server 102.

In Step 201, upon reception of the first RDP request message, the RDP gateway 101 parses the address information of the target RDP server 102 carried in the first RDP request message; deletes the address information of the target RDP server 102 from the first RDP request message to obtain a second RDP request message, and transmits the second RDP request message to the target RDP server 102 corresponding to the parsed address information.

Herein, the username field of the first RDP request message is parsed; the address information of the target RDP server 102 is extracted from the server address field, the address information including the target RDP server 102's IP address or host name, or port number; a forward destination is determined according to the extracted IP address or host name or the port number of the target RDP server 102.

Herein, after the address information of the target RDP server 102 is parsed, the address information of the target RDP server 102 in the username field of the first RDP request message is deleted to obtain a second RDP request message, the corresponding RDP server 102 is connected based on the address information of the target RDP server 102, the second RDP request message is transmitted to the target RDP server 102 corresponding to the parsed address information. In this way, the target RDP server 102 will consider that a user of the RDP terminal 100 logs in normally.

Optionally, the method for remote access may further include:
In Step 202, upon reception of the second RDP request message, the target RDP server 102 corresponding to the parsed address information returns a requested result to the RDP gateway 101.
In Step 203, upon reception of a requested result returned by the target RDP server 102 corresponding to the parsed address information, the RDP gateway 101 transmits the requested result to the RDP terminal 100.

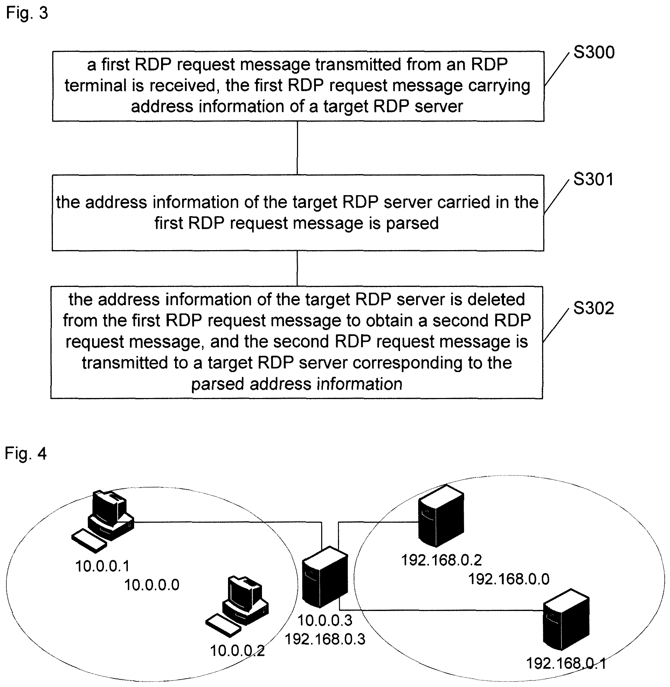

As shown in Fig. 3, the flow chart of performing routing and switching by the RDP gateway includes the steps as follows.

In Step S300, a first RDP request message transmitted from an RDP terminal 100 is received, the first RDP request message carrying address information of a target RDP server 102.

Herein, the username field includes a server address field and a login username and domain name field, the server address field carries the address information of the target RDP server 102, and the login username and domain name field carries a login username and domain name of the RDP terminal 100.

In Step S301, the address information of the target RDP server 102 carried in the first RDP request message is parsed.

Herein, the username field, ip: port\username@domain, in the first RDP request message is parsed, and the address information of the target RDP server 102 in ip: port field, i.e., the IP address or host name or the port number, is extracted.

In Step S302, the address information of the target RDP server 102 is deleted from the first RDP request message to obtain a second RDP request message, and the second RDP request message is transmitted to a target RDP server 102 corresponding to the parsed address information.

Herein, the address information of the target RDP server 102 in the username field of the first RDP request message is deleted to obtain a second RDP request message, the corresponding RDP server 102 is connected based on the address information of the target RDP server 102, the second RDP request message is transmitted to the target RDP server 102 corresponding to the parsed address information. In this way, the target RDP server 102 will consider that a user of the RDP terminal 100 logs in normally.

Optionally, upon reception of a requested result returned by the target RDP server 102 corresponding to the parsed address information, the requested result is transmitted to the RDP terminal 100.

In the embodiments of the disclosure, a first RDP request message transmitted from an RDP terminal 100 is received, the first RDP request message carrying address information of a target RDP server 102; the address information of the target RDP server 102 carried in the first RDP request message is parsed; and the address information of the target RDP server 102 is deleted from the first RDP request message to obtain a second RDP request message, and the second RDP request message is transmitted to a target RDP server 102 corresponding to the parsed address information. In this way, the embodiments of the disclosure can be applied in a network including one RDP gateway 101 and multiple RDP servers 102, the RDP terminal enables the address information of the target RDP server 102 to be carried in the first RDP request message, and transmits the first RDP request message to the RDP gateway 101; the RDP gateway 101 determines, according to the address information of the target RDP server 102, the target RDP server 102 where the second request message is to be forwarded, deletes the address information of the target RDP server 102 from the first RDP request message and transmits the resulting message to the target RDP server 102 corresponding to the address information.

In order to describe the embodiments of the disclosure more clearly, as shown in Fig. 4, the process for performing routing and switching by the RDP gateway according to an embodiment of the disclosure is elaborated by taking a first embodiment as an example.

In the first embodiment, a first sub-network and a second sub-network are preset, and network segments corresponding to the first and second sub-networks are arranged as 10.0.0.0 and 192.168.0.0 respectively; the first sub-network includes an RDP terminal A and an RDP terminal B, the IP address of the RDP terminal A is set to be 10.0.0.1, and the IP address of the RDP terminal B is set to be 10.0.0.2; the second sub-network includes an RDP server A and an RDP server B, the IP address of the RDP server A is set to be 192.168.0.1, and the IP address of the RDP server B is set to be 192.168.0.2; an RDP gateway is arranged between the first sub-network and the second sub-network, gateway processes are deployed on the RDP gateway, the RDP gateway is a physical device in a bridging mode, i.e., an external device independent from the first and second sub-networks, with preset two IP addresses 10.0.0.3 and 192.168.0.3, and the RDP gateway can access the first and second sub-networks simultaneously.

In the first embodiment, when the RDP terminal A needs to access the RDP server A, firstly, a program Mstsc.exe is started in the RDP terminal A, and then the IP address of the RDP gateway (i.e., 10.0.0.3) is input into a "computer" input box on the interface of the program Mstsc.exe, for connecting the RDP terminal A with the RDP gateway; the IP address and login username of the target RDP server (i.e., 192.168.0.1\Administrator) are input into a "username" input box, a login password is input into a "login password" input box. In a working scenario set by a gateway process, the RDP terminal A carries the input IP address and the input login username in a username field of a first RDP request message and transmits the first RDP request message to the RDP gateway; after parsing the IP address 192.168.0.1 of the target RDP server in the username field, the RDP gateway begins to start connection with the RDP server A, then the IP address 192.168.0.1 of the target RDP server in the username field is deleted, and the RDP terminal A is logged in to the RDP server A by using the login name of Administrator. In this way, the RDP terminal A can access remotely the RDP server A through the RDP gateway, and the RDP server A will consider it as a normal user login.

In the first embodiment, when the RDP terminal needs to access the RDP server B, it is only required that 192.168.0.1\Administrator is modified into 192.168.0.2\Administrator in the username input box on the interface of the program Mstsc.exe, with contents in other input boxes remaining unchanged. In this way, the RDP terminal A can access remotely the RDP server B through the RDP gateway.

In order to implement the above method, embodiments of the disclosure further provide an RDP gateway, for implementation of such a device, one can refer to the above implementation of the above method, and detailed description thereof will be omitted.

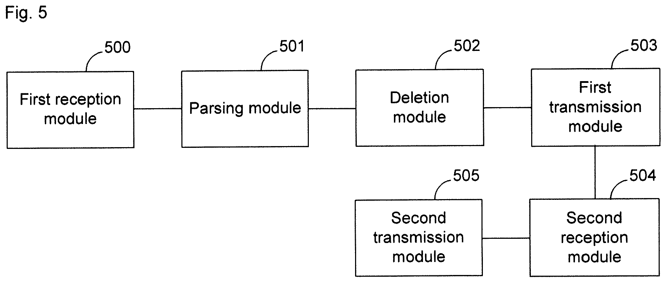

As shown in Fig. 5, an embodiment of the disclosure provides a Remote Desktop Protocol (RDP) gateway, including a first reception module 500, a parsing module 501, a deletion module 502 and a first transmission module 503, in which:
the first reception module 500 is arranged to receive a first RDP request message transmitted from an RDP terminal, the first RDP request message carrying address information of a target RDP server;
the parsing module 501 is arranged to parse the address information of the target RDP server carried in the first RDP request message;
the deletion module 502 is arranged to delete the address information of the target RDP server from the first RDP request message to obtain a second RDP request message; and
the first transmission module 503 is arranged to transmit the second RDP request message to the target RDP server corresponding to the parsed address information.

The division of the above functional modules is only preferred implementation according to embodiments of the disclosure, and the division of functional modules should not be conceived to limit the disclosure.

In a specific embodiment, the RDP gateway may further include:
a second reception module 504 arranged to a requested result returned by the target RDP server corresponding to the parsed address information; and
a second transmission module 505 arranged to transmit the requested result to the RDP terminal.

In a specific embodiment, the address information of the target RDP server may be carried in a username field of the first RDP request message.

In a specific embodiment, the username field may include a server address field and a login username field, the server address field may carry the address information of the target RDP server, and the login username field may carry a login username of the RDP terminal.

In a specific embodiment, the parsing module may be arranged to parse the username field of the first RDP request message, and extract the address information of the target RDP server from the server address field.

In practical applications, the first reception module 500, the parsing module 501, the deletion module 502, the first transmission module 503, the second reception module 504 and the second transmission module 505 can be implemented by a Central Processing Unit (CPU), a Digital Signal Processor (DSP) or a Field-Programmable Gate Array (FPGA) in the RDP gateway.

Embodiments of the disclosure further provide a computer storage medium having stored therein computer-executable instructions arranged to execute a method according to any of the above method embodiments.

It should be appreciated by those skilled in the art that embodiments of the disclosure can be provided as a method, system or computer program product. Therefore, the disclosure can be in the form of a hardware embodiment, a software embodiment or a embodiment combining both hardware and software. In addition, the disclosure can be in the form of a computer program product implemented on one or more computer usable storage media (including but not limiting to a magnetic disk storage and an optical storage) containing computer usable program codes.

The disclosure is described with reference to flow charts and/or block diagrams of the method, device (system) and computer program product according to embodiments of the disclosure. It should be appreciated that computer program instructions can be used to implement each process and/or block in flow charts and/or block diagrams and to implement the combination of processes and/or blocks in the flow charts and/or the block diagrams. Such computer program instructions can be provided to a processor of a general-purpose computer, a special-purpose computer, an embedded processor or other programmable data processing device so as to form a machine so that an instruction implemented by the processor of the computer or other programmable data processing device generates a device for implementing a function specified in one or more processes of a flow chart and/or one or more blocks of a block diagram.

Such computer program instructions can also be stored in a computer readable storage capable of directing a computer or other programmable data processing devices to operate in a specific way so that an instruction stored in the computer readable storage generates an artifact including an instructing device which can implement a function specified in one or more processes of a flow chart and/or one or more blocks of a block diagram.

Such computer program instructions can also be loaded onto a computer or other programmable data processing device so that a series of operation steps are implemented on the computer or other programmable data processing device to generate a computer-implemented processing and therefore an instruction implemented on the computer or other programmable devices provides a step for implementing a function specified in one or more processes of a flow chart and/or one or more blocks of a block diagram.

## Claims

1. A method for performing routing and switching by a Remote Desktop Protocol (RDP) gateway, applied in a network comprising one RDP gateway and a plurality of RDP servers, the method comprising:
receiving a first RDP request message transmitted from an RDP terminal, the first RDP request message carrying address information of a target RDP server;
parsing the address information of the target RDP server carried in the first RDP request message; and
deleting the address information of the target RDP server from the first RDP request message to obtain a second RDP request message, and transmitting the second RDP request message to the target RDP server corresponding to the parsed address information.

2. The method according to claim 1, further comprising:
upon reception of a requested result returned by the target RDP server corresponding to the parsed address information, transmitting the requested result to the RDP terminal.

3. The method according to claims 1 or 2, further comprising:
carrying the address information of the target RDP server in a username field of the first RDP request message.

4. The method according to claim 3, wherein the username field comprises a server address field and a login username field, the server address field carries the address information of the target RDP server, and the login username field carries a login username of the RDP terminal.

5. The method according to claim 4, wherein parsing the address information of the target RDP server carried in the first RDP request message comprises:
parsing the username field of the first RDP request message, and extracting the address information of the target RDP server from the server address field.

6. A method for remote access, applied in a network comprising one Remote Desktop Protocol (RDP) gateway and a plurality of RDP servers, the method comprising:
transmitting, by an RDP terminal, a first RDP request message to the RDP gateway, the first RDP request message carrying address information of a target RDP server;
upon reception of the first RDP request message, parsing, by the RDP gateway, the address information of the target RDP server carried in the first RDP request message; deleting the address information of the target RDP server from the first RDP request message to obtain a second RDP request message, and transmitting the second RDP request message to the target RDP server corresponding to the parsed address information.

7. The method according to claim 6, further comprising:
upon reception of the second RDP request message, returning, by the target RDP server corresponding to the parsed address information, a requested result to the RDP gateway; and
upon reception of a requested result returned by the target RDP server corresponding to the parsed address information, transmitting, by the RDP gateway, the requested result to the RDP terminal.

8. The method according to claims 6 or 7, further comprising:
carrying the address information of the target RDP server in a username field of the first RDP request message.

9. The method according to claim 8, wherein the username field comprises a server address field and a login username field, the server address field carries the address information of the target RDP server, and the login username field carries a login username of the RDP terminal.

10. The method according to claim 9, wherein upon reception of the first RDP request message, parsing, by the RDP gateway, the address information of the target RDP server carried in the first RDP request message comprises:
upon reception of the first RDP request message, parsing, by the RDP gateway, the username field of the first RDP request message, and extracting the address information of the target RDP server from the server address field.

11. A Remote Desktop Protocol (RDP) gateway, comprising a first reception module, a parsing module, a deletion module and a first transmission module, wherein
the first reception module is arranged to receive a first RDP request message transmitted from an RDP terminal, the first RDP request message carrying address information of a target RDP server;
the parsing module is arranged to parse the address information of the target RDP server carried in the first RDP request message;
the deletion module is arranged to delete the address information of the target RDP server from the first RDP request message to obtain a second RDP request message; and
the first transmission module is arranged to transmit the second RDP request message to the target RDP server corresponding to the parsed address information.

12. The RDP gateway according to claim 11, further comprising:
a second reception module arranged to a requested result returned by the target RDP server corresponding to the parsed address information; and
a second transmission module arranged to transmit the requested result to the RDP terminal.

13. The RDP gateway according to claim 11 or 12, wherein the address information of the target RDP server is carried in a username field of the first RDP request message.

14. The RDP gateway according to claim 13, wherein the username field comprises a server address field and a login username field, the server address field carries the address information of the target RDP server, and the login username field carries a login username of the RDP terminal.

15. The RDP gateway according to claim 14, wherein the parsing module is arranged to parse the username field of the first RDP request message, and extract the address information of the target RDP server from the server address field.

16. A system for remote access, comprising at least one Remote Desktop Protocol (RDP) terminal, an RDP gateway and at least one RDP server, wherein
the RDP terminal is arranged to transmit a first RDP request message to the RDP gateway, the first RDP request message carrying address information of a target RDP server;
the RDP gateway is arranged to: receive, from the RDP terminal, the first RDP request message carrying the address information of the target RDP server; parse the address information of the target RDP server carried in the first RDP request message; delete the address information of the target RDP server from the first RDP request message to obtain a second RDP request message, and transmit the second RDP request message to the target RDP server corresponding to the parsed address information; and
the RDP server is arranged to receive the second RDP request message transmitted from the RDP gateway, and return a requested result to the RDP gateway.

17. A computer storage medium having stored therein computer-executable instructions arranged to execute the method according to any one of claims 1 to 5 and claims 6 to 10.
